# EUROPEAN PATENT SPECIFICATION

(11) **EP 4 244 276 B1**
(45) Date of publication and mention of the grant of the patent: **05.06.2024**
(21) Application number: 21711172.3
(22) Date of filing: 09.02.2021
(51) Int. Cl.: C08G 77/12, C08G 77/20, C08G 77/00, C08L 83/04, C09D 183/04, C09J 183/04

(54) **A SILOXANE COMPOSITION AND USES THEREOF**
SILOXANZUSAMMENSETZUNG UND DEREN VERWENDUNGEN
COMPOSITION DE SILOXANE ET LEUR UTILISATIONS

(43) Date of publication of application: 20.09.2023
(73) Proprietor: Wacker Chemie AG, 81737 München (DE)
(72) Inventor: NIE, Jian, Shanghai 200233 (CN); WU, Junnan, Shanghai 200233 (CN)
(74) Representative: Mieskes, Klaus Theoderich
(86) International application number: PCT/CN2021/076173
(87) International publication number: WO 2022/170456

(56) References cited:
- CN-A- 111 154 269
- US-A1- 2019 300 767
- US-A1- 2020 087 514

## Description

### Field of invention

The present disclosure relates to a siloxane composition and uses thereof.

### Background of Invention

Silicone gel compositions are addition reaction curable organopolysiloxane compositions which typically comprise i) an organopolysiloxane having at least two silicon-bonded alkenyl groups such as vinyl groups as a base polymer, ii) an organohydrogenpolysiloxane having at least three silicon-bonded hydrogen atoms (i.e. Si-H groups) as a crosslinker, and iii) a platinum-based catalyst, and which yield a cured product via an addition reaction of the Si-H groups to the alkenyl groups.

The cured products of conventional silicone gel compositions usually have a high penetration value (i.e. very soft), which means undesired bubble or peeling caused by low gel strength will inevitably occur if these silicone gels are placed under a negative pressure environment e.g. at high altitudes. Increasing hardness of the cured gels is used to alleviate the problem. However, a higher hardness of cured gels usually leads to a decreased elongation at break and a reduced tackiness, which affects their application in display potting or optical bonding.

Patent document CN 111 154 269 describes a curable silicone composition comprising two different components that are blended together before being cured and used in the manufacture of an electronic device module. In particular, a component (A) of example 1 comprises 26 parts by weight of an organopolysiloxane end-capped by vinyl groups and having a viscosity of 100 mPa.s (25°C), 0.5 parts by weight of a resinous polysiloxane comprising vinyl groups and M and Q units, a hydrosilylation catalyst and various fillers. Component (B) of example 1 comprises 28.0 parts by weight of an organopolysiloxane end-capped by vinyl groups and having a viscosity of 1000 mPa.s (25°C), 1.25 parts by weight of an organopolysiloxane end-capped by SiH groups and having a viscosity of 80 mPa.s (25°C), an inhibitor and various fillers. Components A and B are cured at 120°C to form a gel. The composition of example 1 describes the use of two different organopolysiloxanes end-capped by vinyl groups having different viscosities.

Patent document US 2019/300767 describes a laminate having a gel layer on a substrate wherein the gel layer is able, after cure, to protect the substrate and to provide heat resistance, softness and flexibility, low modulus of elasticity and low stress. The gel layer is prepared from a composition comprising 9.9 wt.% of a first organopolysiloxane end-capped by vinyl groups, 66.3 wt.% of an organopolysiloxane comprising vinyl groups along the chain, 6.7 wt.% of a resinous organopolysiloxane of general formula M^{Vi}Q, 8.8 wt.% of an organopolysiloxane end-capped by SiH groups, a hydrosilylation inhibitor, silica and a platinum-based hydrosilylation catalyst. The silicone gel is used as a protective layer for electronic components.

Patent document US 2020/087514 describes an addition-curable silicone composition used in the manufacture of electronic device. Upon cure, the silicone compositions provide a silicone gel suitable to be used as a bonding material or protective agent in the manufacture of electronic components. In particular, composition of example 5 comprises 43.9 parts by weight of an organopolysiloxane end-capped by vinyl groups, 5.98 parts by weight of a second organopolysiloxane end-capped by vinyl groups, 29.7 parts by weight of a resinous polysiloxane comprising vinyl groups and M and Q units, a hydrosilylation catalyst, 16.1 parts by weight of an organopolysiloxane end-capped by SiH groups, an inhibitor and various fillers.

Silicone gel compositions using vinyl MQ silicone resin as a crosslinker have also been reported. EP1737504B discloses a silicone gel composition containing 100 parts by weight of vinyl-terminated polydimethylsiloxane with a viscosity of 400 mPa.s, 44 parts by weight of vinyl MQ silicone resin, 18 parts by weight of hydrogen-terminated polydimethylsiloxane with a viscosity of 15 mPa·s and 0.01% of platinum-based catalyst. However, such silicone gel still has a higher penetration value of 135, which is not suitable for use under a negative pressure environment due to the occurrence of bubble or peeling.

### Summary of invention

In view of the existing problems, the present disclosure provides a siloxane composition and a silicone gel cured therefrom which has a suitable low penetration and exhibits at least one or more of the below performances:
1) a higher elongation at break and a better resistance to deformation and tension compared to those existing gels with a same penetration value;
2) a better gel tackiness;
3) an excellent resistance to high temperature, no bubble or peeling occurs when the gel is subject to a temperature of 95°C for 200 h;
4) an excellent resistance to negative pressure, no bubble or peeling occurs when the gel is subject to a negative pressure of -1 atm for 3 d.

There are two reasons for the occurrence of bubble or peeling. One is that some invisible bubbles in the gel will expand rapidly at high temperature or at negative pressure, which leads to visible expanded bubbles or causes peeling or crack if the strength of gel is not high enough. The other is that the substrate for supporting gel will warp at high temperature or at negative pressure, then the gel will be pulled apart causing peeling or crack if the gel strength is low.

Herein the term "silicone gel" refers to a cured product which has a low cross-linking density, comprises an organopolysiloxane as the primary component, and exhibits a penetration value according to ASTM D1403 (¼ cone) within a range from 20 to 200. This corresponds with a product that returns a measured value (rubber hardness value) of zero for a rubber hardness measurement conducted in accordance with GB/T531-1999, and is of sufficiently low hardness as to exhibit no effective rubber hardness value.

Wherein the term "penetration" refers to the depth to which the standard cone drops feely into the gel sample under a certain load for a certain time. The greater the penetration, the softer the gel and the lower its mechanical strength. Since the mechanical strength of silicone gel increases and the penetration decreases with the increasing of crosslinking density, and the mechanical strength decreases and the penetration increases with the decreasing of the crosslinking density, penetration value of silicone gel can also be used to characterize its crosslinking density. The higher the penetration value, the lower the crosslinking density.

Herein the term "silicone rubber" refers to a cured product which comprises an organopolysiloxane as the primary component, exhibits a measured value (rubber hardness value) for a rubber hardness measurement conducted in accordance with GB/T531-1999 that exceeds zero, and displays an effective rubber hardness value.

Herein the term "tackiness" refers to a property of a material that it is sticky in touch but does not adhere to other materials to any significant degree, which is essentially different from "adhesion". "Adhesion" refers to a property of a material that adheres to other materials for example a substrate, via typically chemical action, and bonding strength is usually used to evaluate adhesion. Besides, adhesion is irreversible, the material cannot adhere to other materials again once stripped therefrom. However, a material with tackiness adheres to other materials via typically physical action and tackiness is reversible, the material can adhere to other materials again once stripped therefrom.

Herein the "viscosity", unless specified, is measured according to conventional methods in the art.

The first aspect of the present disclosure provides a siloxane composition, comprising:
(a) at least one organopolysiloxane containing two alkenyl groups bonded to silicon atoms at both ends of the chain per molecule,
(b) at least one organopolysiloxane containing at least three alkenyl groups bonded to silicon atoms per molecule,
(c) at least one organopolysiloxane containing two hydrogen atoms bonded to silicon atoms at both ends of the chain per molecule, and
(d) at least one hydrosilylation catalyst;
with the proviso that component (c) is used in an amount of greater than or equal to 30 wt%, preferably greater than or equal to 40 wt%, based on the total weight of the composition, and that the composition comprises less than or equal to 0.01 wt% of component (e) at least one organopolysiloxane containing at least three hydrogen atoms bonded to silicon atoms per molecule based on the total weight of the composition,
and component (c) has a dynamic viscosity of greater than or equal to 30 mPa.s and less than 1,000 mPa.s at 25°C.

### Component (a)

The organopolysiloxane (a) is well known. Alkenyl groups are bonded to silicon atoms at both ends of the chain, and groups bonded to the remaining silicon atoms are each independently selected from monovalent organic groups free of aliphatic unsaturation.

The organopolysiloxane (a) is typically linear. Some exemplary polyorganosiloxanes (a) can be described by the formula as follows:

R¹R²₂SiO(R²₂SiO)ₘSiR²₂R¹

wherein R¹ is independently at each occurrence an alkenyl group having from 2 to 6 carbon atoms, for example vinyl, allyl, propenyl, butenyl, hexenyl, preferably vinyl, allyl and propenyl, more preferably vinyl;
R² is independently at each occurrence a substituted or unsubstituted monovalent organic group especially monovalent hydrocarbon group having from 1 to 20 preferably 1 to 10 carbon atoms, for example, alkyl such as methyl, ethyl, propyl, butyl, pentyl, hexyl, octyl, aryl or alkaryl such as phenyl, tolyl, xylyl, mesityl, ethylphenyl, benzyl, naphthyl, and halogenated or organic-group-functionalized derivatives of the above groups such as 3,3,3-trifluoropropyl, o-, p- and m-chlorophenyl, aminopropyl, 3-isocyanatopropyl, cyanoethyl, preferably methyl and phenyl, more preferably methyl;
m is a positive number, and is such that the organopolysiloxane (a) has a dynamic viscosity at 25°C of from 100 to 50,000 mPa·s, for example from 200 to 20,000 mPa·s, particularly from 500 to 10,000 mPa·s.

Component (a) of the present disclosure may be a single alkenyl-terminated organopolysiloxane, or may be a mixture of different alkenyl-terminated organopolysiloxanes which differ in molecular structure (for example type and number of substituents), or viscosity. For a mixture of organopolysiloxanes, m represents an average value, and the viscosity range met by m is relative to the viscosity of the mixture.

Generally, silicone compositions used as potting materials are required to have a lower viscosity, and correspondingly the viscosity of alkenyl-terminated organopolysiloxane is usually low. However, in order to reduce the crosslinking density, and obtain a silicone gel with higher elongation at break, better tackiness and lower penetration, a small amount of alkenyl-terminated organopolysiloxane with a high viscosity is preferred to be incorporated in component (a).

In an embodiment herein, component (a) comprises (a1) an organopolysiloxane containing two alkenyl groups bonded to silicon atoms at both ends of the chain per molecule with a dynamic viscosity of greater than or equal to 100 mPa·s and less than 5,000 mPa-s at 25°C and (a2) an organopolysiloxane containing two alkenyl groups bonded to silicon atoms at both ends of the chain per molecule with a dynamic viscosity of greater than or equal to 5,000 mPa-s and less than or equal to 50,000 mPa·s at 25°C. According to the above embodiment, component (a2) is suitably used in an amount of from 2 wt% to 20 wt% for example from 5 wt% to 15 wt% based on the total weight of composition (a); the ratio of the number of moles of alkenyl groups provided by component (a1) to that provided by component (a2) is preferably (10-50) :1.

In the present disclosure, component (a) is suitably used in an amount of from 20 wt% to 70 wt%, for example from 35 wt% to 55 wt%, based on the total weight of the composition.

### Component (b)

The organopolysiloxane as component (b), acting as a crosslinker, is different from the organopolysiloxane as component (a). The polyorganosiloxane (b) may be linear, branched or resinous. Linear polyorganosiloxane (b) is typically composed of units selected from R²₃SiO_{1/2}, R¹R²SiO_{2/2}, R¹R²₂SiO_{1/2} and R²₂SiO_{2/2}, wherein R¹ and R² are as defined above. Branched or resinous polyorganosiloxane (b) further comprises trifunctional units such as R¹SiO_{3/2} and R²SiO_{3/2}, and/or tetrafunctional units such as SiO_{4/2}, wherein R¹ and R² are as defined above.

Some exemplary polyorganosiloxanes (b) includes (b1) an organopolysiloxane consisting essentially of R¹R²₂SiO_{1/2} and SiO_{4/2} units, (b2) an organopolysiloxane consisting essentially of R²₃SiO_{1/2} and R¹R²SiO_{2/2} units, (b3) an organopolysiloxane consisting essentially of R¹R²₂SiO_{1/2}, R¹R²SiO_{2/2} and R²₂SiO_{2/2} units, and (b4) an organopolysiloxane consisting essentially of R¹R²₂SiO_{1/2}, R²₂SiO_{2/2} and R²SiO_{3/2} units, wherein R¹ and R² are as defined above. Herein "essentially" means that the polyorganosiloxane (b) contains at least 80 mol%, for example at least 90 mol%, even at least 95 mol% of the units listed above.

In the present disclosure, polyorganosiloxanes (b1) is particularly preferred, and the molar ratio of R¹R²₂SiO_{1/2} units to SiO_{4/2} units is suitably within a range of (0.4-1):1, for example (0.5-0.9):1.

Component (b) is suitably used in an amount of from 1 wt% to 10 wt%, for example from 2 wt% to 8 wt%, based on the total weight of the composition.

### Component (c)

Component (c) is used as a chain extender.

The organopolysiloxane (c) is typically linear. Some exemplary polyorganosiloxanes (c) can be described by the formula as follows:

HR²₂SiO(R²₂SiO)ₙSiR²₂H

wherein R² is as defined above;
n is a positive number, and is such that the organopolysiloxane (c) has a dynamic viscosity of greater than or equal to 30 mPa·s and less than 1,000 mPa·s at 25°C.

Component (c) of the present disclosure may be a single hydrogen-terminated organopolysiloxane, or may be a mixture of different hydrogen-terminated organopolysiloxanes which differ in molecular structure (for example type and number of substituents), or viscosity. For a mixture of organopolysiloxanes, n represents an average value, and the viscosity range met by n is relative to the viscosity of the mixture.

In order to obtain a silicone gel with a better tackiness and lower penetration, component (c) of the present disclosure preferably comprises (c1) an organopolysiloxane containing two hydrogen atoms bonded to silicon atoms at both ends of the chain per molecule with a dynamic viscosity of greater than or equal to 30 mPa.s and less than or equal to 200 mPa.s at 25°C and (c2) an organopolysiloxane containing two hydrogen atoms bonded to silicon atoms at both ends of the chain per molecule with a dynamic viscosity of greater than 200 mPa·s and less than or equal to 5,000 mPa·s at 25°C. According to the above embodiment, the ratio of the number of moles of Si-H groups provided by component (c1) to that provided by component (c2) is preferably 2: (1-10), particularly 1: (1-5).

In the present disclosure, component (c) provides 0.6 to 1.0 moles of Si-H groups per mole of total silicon-bonded alkenyl groups in components (a) and (b).

Component (c) is suitably used in an amount of from 30 wt% to 70 wt%, for example from 40 wt% to 60 wt%, based on the total weight of the composition.

### Component (d)

Component (d) can be a variety of hydrosilylation catalysts used in the prior arts for addition-curing silicone compositions, preferably a platinum-based catalyst, for example chloroplatinic acid, chloroplatinates, olefin complexes of platinum, and alkenylsiloxane complexes of platinum. The platinum-based catalyst can be used in an amount subject to the desired curing rate and economic consideration, which is usually a minimum level required to ensure an effective hydrosilylation reaction. Generally, the weight of platinum metal in the siloxane composition is from 0.1 to 500 ppm, for example from 1 to 100 ppm.

### Component (e)

The polyorganosiloxane (e), containing at least three hydrogen atoms bonded to silicon atoms per molecule, may be linear, cyclic, branched or resinous. Linear or cyclic polyorganosiloxane (e) is typically composed of units selected from R²₃SiO_{1/2}, HR²SiO_{2/2}, HR²₂SiO_{1/2} and R²₂SiO_{2/2}, wherein R² is as defined above. Branched or resinous polyorganosiloxane (e) further comprises trifunctional units such as HSiO_{3/2} and R²SiO_{3/2}, and/or tetrafunctional units such as SiO_{4/2}, wherein R² is as defined above.

The siloxane composition of the present disclosure is free of polyorganosiloxane (e). "Free of" means polyorganosiloxane (e) is in an amount of less than or equal to 0.01 wt%, even less than or equal to 0.001 wt%, based on the total weight of the composition

### Component (f)

The siloxane composition may further comprise inhibitor (f) to control the pot life and curing rate of the composition. The inhibitor can be a variety of inhibitors used in the art, for example alkynol such as 1-ethynyl-1-cyclohexanol, 2-methyl-3-butyn-2-ol; polymethylvinylcyclosiloxanes, such as 1,3,5,7-tetravinyltetramethyltetracyclo-siloxane, alkyl maleate. The amount of the inhibitor can be selected according to its chemical structure and the desired curing rate. Generally, the weight of inhibitor in the composition is from 1 to 50,000 ppm, for example from 10 to 10,000 ppm.

### Other optical components

The siloxane composition may further comprise a filler if needed. Examples of fillers include non-thermal conductive fillers such as calcium carbonate, fumed silica, precipitated silica, silica powder, diatomaceous earth, zirconium silicate, organic montmorillonite, titanium dioxide, and thermally conductive fillers such as aluminum oxide, zinc oxide, magnesium oxide, aluminum hydroxide, aluminum nitride, boron nitride, silicon carbide, aluminum, copper, nickel, gold, silver, graphite, graphene, but not limited thereto. As is known in the art, siloxane compositions used as adhesive, sealant or protective agent or potting material for electronic components may contain an appropriate amount of fillers; while siloxane compositions used as potting material or optical bonding material for displays should not contain fillers due to the requirement of light transmittance.

The siloxane composition may also comprise an appropriate amount of other additives, as long as such additives do not impair the effects of the present invention. Examples of such additives include solvents, diluents, surface treatment agents for fillers and color pastes, but not limited thereto. Examples of solvents to be mentioned are decamethylcyclopentasiloxane, hexamethyldisiloxane, octamethyltrisiloxane, heptamethylhexyltrisiloxane, decamethyltetrasiloxane, dodecamethylpentasiloxane, tetradecamethylhexasiloxane, isododecane. Examples of diluents to be measured are dimethyl silicone oils having a dynamic viscosity of from 10 to 5,000 mPa·s at 25°C, MDT silicone oils having a dynamic viscosity of from 15 to 300 mPa-s at 25°C. Preferably, the composition does not contain any of the aforesaid additives. "Not contain" means the siloxane composition contains less than 0.1 wt%, even less than 0.01 wt%, of the aforesaid additives based on the total weight of the composition.

In a preferred embodiment, the siloxane composition comprises:
(a) 20-70 wt% of at least one organopolysiloxane containing two alkenyl groups bonded to silicon atoms at both ends of the chain per molecule,
(b) 1-10 wt% of at least one organopolysiloxane containing at least three alkenyl groups bonded to silicon atoms per molecule,
(c) 30-70 wt% of at least one organopolysiloxane containing two hydrogen atoms bonded to silicon atoms at both ends of the chain per molecule, and
(d) at least one hydrosilylation catalyst.

Suitably the siloxane composition of the present disclosure is stored as two or more separate packages where components (b), (c) and (d) are not stored in the same package and components (a), (c) and (d) are not stored in the same package.

The siloxane composition of the present disclosure has a viscosity at room temperature (23±2)°C of suitably from 200 to 10,000 mPas, for example from 500 to 5,000 mPa, especially from 500 to 2,000 mPa·s. The viscosity herein refers to a mixed viscosity of the composition before curing. When the composition is stored in two or more separate packages, the viscosity also refers to the viscosity of each package.

The second aspect of the present disclosure provides a silicone gel cured from the siloxane composition of the first aspect of the present disclosure.

It is obtained by crosslinking or curing the composition described in the first aspect of the present disclosure, or mixing the separate packages as described above followed by crosslinking or curing. Generally, the crosslinking or curing is carried out at a temperature of 15-180°C for 10min - 72h. A lower curing temperature and a short curing time are desired. Preference is given to curing at a temperature of 20-80°C for 15-120 min.

The silicone gel preferably has a penetration value of from 20 to 50 measured according to ASTM D1403 at ¼ cone.

The third aspect of the present disclosure provides use of the siloxane composition of the first aspect as adhesive, sealant or protective agent for electronic components.

The cured siloxane composition of the present disclosure is in a gel form and is excellent in elongation at break, deformability and followingness, it can be used as adhesive, sealant or protective agent for electronic components. Such electronic components include but are not limited to circuit boards, CPUs, and mobile phones.

The fourth aspect of the present disclosure provides use of the siloxane composition of the first aspect as potting material for electronic components or displays.

The siloxane composition of the present disclosure has a low viscosity and good fluidity, which facilitates the operation for potting of pressure sensors, metering sensors, insulated gate bipolar transistors, and displays especially large format displays such as large format educational displays, outdoor displays, large format touch screens, and touch automotive, navigation or aviation displays, etc.. Herein the large format display generally refers to a display with a size of greater than or equal to 50 inches, even greater than or equal to 86 inches.

The siloxane composition of the present disclosure is used to fill the gap between the large format display and glass panel so that the air in the gap is discharged, making the display anti-reflective. Moreover, the cured siloxane composition of the present disclosure is a gel with a low penetration and is excellent in tackiness, light transmittance and negative pressure resistance, it can be suitable for display potting at high altitudes.

The fifth aspect of the present disclosure provides use of the siloxane composition of the first aspect as optical bonding material for displays.

The cured siloxane composition of the present disclosure is in a gel form and is excellent in elongation at break, deformability, followingness, tackiness and light transmittance, it can be used as optical bonding material for displays especially large format displays. In addition, the cured gel has a low penetration and is excellent in resistance to negative pressure, which is suitable for optical bonding at high altitudes.

### Brief description of the drawings

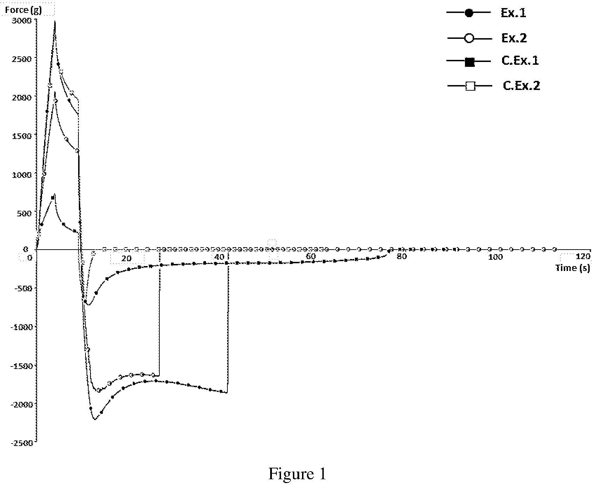

Fig.1 demonstrates tackiness test curves of the silicone gels derived by Examples 1-2 and Comparative Examples 1-2.

### Detailed description of the preferred embodiment

The present invention is further illustrated by the following examples, but is not limited to the scope thereof. Any experimental methods with no conditions specified in the following examples are selected according to the conventional methods and conditions, or product specifications.

### Determination of viscosity

The viscosities of components A and B were measured by Brookfield viscometer using No. 03 spindle at a speed of 10 rpm at room temperature (23±2)°C.

### Determination of penetration

It was carried out according to ASTM D1403 using a ¼ scale cone of 9.38 g at room temperature (23±2)°C. Samples to be tested shall have a diameter of greater than or equal to 35 mm and a depth of greater than or equal to 30 mm. Before the test each siloxane composition was poured into a flat-bottomed glass dish and cured at 65°C for 30 min. Then the glass dish with the sample to be tested was placed on a platform of a penetrometer, which was adjusted to an appropriate position via a crane and fixed, afterwards the rod connecting the cone was slowly lowered by a handwheel until it was observed through a mirror that the cone tip touched the surface of the sample, then the standard cone penetrated to the sample when released to fall under its own weight for 10 s after zero setting, and the depth was recorded by a displacement indicator. The same sample was tested in parallel for at least 3 times, and the distances between each test point and the glass dish edge should not be less than 10 mm. The standard cone should be replaced with a clean one or wiped by a cotton or cloth dipped with alcohol for each test. The average of each test was taken as the result.

### Determination of Shore hardness A

It was conducted according to standard GB/T531-1999.

### Determination of tackiness

It was determined by a texture analyzer using a P/25 cone. Before the test a flat-bottomed glass dish (with a diameter of 35 mm and a depth of 30 mm) was filled with the siloxane composition and was subjected to 65°C for 30 min. Then the glass dish with the sample to be tested was placed directly under the test cone, afterwards the texture analyzer was turned on and the test cone moved down at a speed of 2 mm/s to the surface of the sample until it penetrated the sample to a depth of 2 mm, then the test cone was kept still for 5 s to make it fully infiltrated by the sample afterwards it moved upwards at a speed of 2 mm/s until the sample was separated therefrom. Forces with time of the test cone penetrating into the sample and pulled out of the sample were recorded by the sensor. The tackiness of the sample can be evaluated according to the area enclosed below the time axis by the force-time curve and the time axis. The larger the area is, the better the tackiness is.

### High temperature test

Each component A and B were mixed at a ratio of 1:1 by a static mixer, and the obtained mixture was applied to a polarizer of an 80-inch display in a mode of fishbone diagram, then a glass panel was covered thereon slightly. No bubble should be occurred during the whole process. Afterwards the product was subjected to 65°C for 30 min, and then left still at room temperature for 3 days before it was placed in an oven of 95°C for 200 h. The product was determined to pass the high temperature test if no bubble or peeling was observed or no separation between the gel and polarizer or glass panel occurred after being placed at 95°C for 200 h.

### Negative pressure test

Each component A and B were mixed at a ratio of 1:1 by a static mixer, and the obtained mixture was applied to a polarizer of a 14-inch display in a mode of fishbone diagram, then a glass panel was covered thereon slightly. No bubble should be occurred during the whole process. Afterwards the product was subjected to 65°C for 30 min, and then left still at room temperature for 3 days before it was placed in an environment of -1 atm for 3 d. The product was determined to pass the negative pressure test if no bubble or peeling was observed or no separation between the gel and polarizer or glass panel occurred after being placed at -1 atm for 3 d.

Details of the raw materials used in the Examples and Comparative Examples are as follows.
a1: dimethylvinylsiloxy-terminated polydimethylsiloxane, with a dynamic viscosity of about 1,000 mPa·s at 25°C and a vinyl content of 0.124 mmol/g, supplied by Wacker Chemicals.
a2: dimethylvinylsiloxy-terminated polydimethylsiloxane, with a dynamic viscosity of about 20,000 mPa·s at 25°C and a vinyl content of 0.042 mmol/g, supplied by Wacker Chemicals.
b1: vinyl MQ resin, with a molar ratio of M units to Q units of 0.7:1 and a vinyl content of 0.78 mmol/g, supplied by Wacker Chemicals.
b2: trimethylsiloxy-terminated polydimethylsiloxane having multiple vinyl groups bonded to silicon atoms in the side chain, with a dynamic viscosity of 340 to 820 mPa·s at 25°C and a vinyl content of 2.8 mmol/g, supplied by Wacker Chemicals.
c1: dimethylhydrosiloxy-terminated polydimethylsiloxane, with a dynamic viscosity of about 65 mPa·s at 25°C and a hydrogen content of 0.53 mmol/g, supplied by Wacker Chemicals.
c2: dimethylhydrosiloxy-terminated polydimethylsiloxane, with a dynamic viscosity of about 1,000 mPa.s at 25°C and a hydrogen content of 0.12 mmol/g, supplied by Wacker Chemicals.
c3: dimethylhydrosiloxy-terminated polydimethylsiloxane, with a dynamic viscosity of about 15 mPa·s at 25°C and a hydrogen content of 1.8 mmol/g, supplied by Wacker Chemicals.
d: platinum-based catalyst, WACKER^{®} CATALYST EP, supplied by Wacker Chemicals.
e: trimethylsiloxy-terminated polydimethylsiloxane having multiple hydrogen atoms bonded to silicon atoms in the side chain, with a dynamic viscosity of 150 mPa·s at 25°C and a hydrogen content of 1.8 mmol/g, supplied by Wacker Chemicals.
f: inhibitor, WACKER^{®} INHIBITOR PT 88, supplied by Wacker Chemicals.
g: methyl MQ resin, WACKER^{®} MQ 803, supplied by Wacker Chemicals.

### Examples 1-2 and Comparative Examples 1-3

According to the formulas in Table 1, the ingredients in each Component A and Component B were mixed well respectively. Then Component A and B were mixed respectively and the obtained mixture was cured at 65°C for 30 min to give a silicone gel.

Table 2 shows penetration values of the silicone gels obtained in each example and comparative example. Since Comparative Example 3 gave a silicone rubber instead of a silicone gel, Shore hardness A was measured.

Figure 1 depicts tackiness test curves of the silicone gels derived by Examples 1-2 and Comparative Examples 1-2. It can be seen that the one derived by Example 1 exhibits excellent tackiness, and the one of Example 2 displays good tackiness, while those of Comparative Examples 1-2 shows a significantly worse tackiness than those of Examples 1-2. The silicone rubber derived by Example 3 had no tackiness, so the corresponding test was not performed.

Table 3 shows test results of the silicone gels obtained in Examples 1-2 and Comparative Examples 1-2 under high temperature and negative pressure. The one of Comparative Example 1 failed both tests since bubble or peeling was observed after the tests. The one of Comparative Example 2 also failed both tests since separation between the gel and polarizer or glass panel was observed after the tests.

**Table 1**

| | Ingredients (parts by weight) | Example 1 | Example 2 | Comparative Example 1 | Comparative Example 2 | Comparative Example 3 |
|---|---|---|---|---|---|---|
| Component A | a1 | 86.05 | 86.05 | 86.05 | 86.05 | 86.05 |
| | a2 | 7.96 | 7.96 | 7.96 | 7.96 | 7.96 |
| | b1 | 5.88 | / | 5.88 | 5.88 | 5.88 |
| | b2 | / | 2.1 | / | / | / |
| | g | / | 3.78 | / | / | / |
| | d | 0.10 | 0.10 | 0.10 | 0.10 | 0.10 |
| | visosity (mPa·s) | 1,450 | 1,240 | 1,450 | 1,450 | 1,450 |
| Component B | a2 | 1.47 | 1.47 | 1.47 | 1.47 | 1.47 |
| | b1 | 1.09 | / | 1.09 | 1.09 | 1.09 |
| | g | / | 1.09 | / | / | / |
| | c1 | 7.79 | 7.79 | / | / | / |
| | c2 | 89.25 | 89.25 | 97.05 | / | 50.00 |
| | c3 | / | / | / | 8.24 | / |
| | e | / | / | / | / | 4.60 |
| | f | 0.39 | 0.39 | 0.39 | 0.39 | 0.39 |
| | visosity (mPa·s) | 1,000 | 995 | 1,085 | NG* | 940 |
| Si-H/Si-Vi (molar ratio) | | 0.899 | 0.876 | 0.706 | 0.899 | 0.865 |

| | | | | | | |
|---|---|---|---|---|---|---|
| *: Not measured. | | | | | | |

**Table 2**

| | Example 1 | Example 2 | Comparative Example 1 | Comparative Example 2 | Comparative Example 3 |
|---|---|---|---|---|---|
| Penetration value | 32 | 32 | 62 | 31 | / |
| Shore hardness A | / | / | / | / | 12 |

**Table 3**

| | Example 1 | Example 2 | Comparative Example 1 | Comparative Example 2 |
|---|---|---|---|---|
| High temperature test | passed | passed | failed | failed |
| Negative pressure test | passed | passed | failed | failed |

## Claims

1. A siloxane composition, comprising:
(a) at least one organopolysiloxane containing two alkenyl groups bonded to silicon atoms at both ends of the chain per molecule,
(b) at least one organopolysiloxane containing at least three alkenyl groups bonded to silicon atoms per molecule,
(c) at least one organopolysiloxane containing two hydrogen atoms bonded to silicon atoms at both ends of the chain per molecule, and
(d) at least one hydrosilylation catalyst;
with the proviso that component (c) is used in an amount of greater than or equal to 30 wt% based on the total weight of the composition, and that the composition comprises less than or equal to 0.01 wt% of component (e) at least one organopolysiloxane containing at least three hydrogen atoms bonded to silicon atoms per molecule based on the total weight of the composition; and
component (c) has a dynamic viscosity of greater than or equal to 30 mPa·s and less than 1,000 mPa s at 25°C, measured with a Brookfield viscometer using number 3 spindle at a speed of 10 rpm at room temperature.

2. The siloxane composition of claim 1, wherein component (c) is used in an amount of greater than or equal to 40 wt% based on the total weight of the composition

3. The siloxane composition of claim 1 or 2, wherein component (c) comprises
(c1) an organopolysiloxane containing two hydrogen atoms bonded to silicon atoms at both ends of the chain per molecule with a dynamic viscosity of greater than or equal to 30 mPa s and less than or equal to 200 mPa·s at 25°C and
(c2) an organopolysiloxane containing two hydrogen atoms bonded to silicon atoms at both ends of the chain per molecule with a dynamic viscosity of greater than 200 mPa s and less than or equal to 5,000 mPa·s at 25°C.

4. The siloxane composition of claim 3, wherein the ratio of the number of moles of Si-H groups provided by component (c1) to that provided by component (c2) is 2: (1-10).

5. The siloxane composition of any one of claims 1 to 4, wherein component (c) provides 0.6 to 1.0 moles of Si-H groups per mole of total silicon-bonded alkenyl groups in components (a) and (b).

6. The siloxane composition of any one of claims 1 to 5, wherein component (b) is selected from the group consisting of
(b1) an organopolysiloxane consisting essentially of R¹R²₂SiO_{1/2} and SiO_{4/2} units,
(b2) an organopolysiloxane consisting essentially of R²₃SiO_{1/2} and R¹R²SiO_{2/2} units,
(b3) an organopolysiloxane consisting essentially of R¹R²₂SiO_{1/2}, R¹R²SiO_{2/2} and R²₂SiO_{2/2} units, and
(b4) an organopolysiloxane consisting essentially of R¹R²₂SiO_{1/2}, R²₂SiO_{2/2} and R²SiO_{3/2} units;
wherein R¹ is independently at each occurrence an alkenyl group having from 2 to 6 carbon atoms, and R² is independently at each occurrence a monovalent hydrocarbon group free of aliphatic unsaturation having from 1 to 20 carbon atoms.

7. The siloxane composition of any one of claims 1 to 6, wherein component (a) comprises
(a1) an organopolysiloxane containing two alkenyl groups bonded to silicon atoms at both ends of the chain per molecule with a dynamic viscosity of greater than or equal to 100 mPa s and less than 5,000 mPa s at 25°C and
(a2) an organopolysiloxane containing two alkenyl groups bonded to silicon atoms at both ends of the chain per molecule with a dynamic viscosity of greater than or equal to 5,000 mPa s and less than or equal to 50,000 mPa s at 25°C.

8. The siloxane composition of any one of claims 1 to 7, wherein the composition comprises:
(a) 20-70 wt% of at least one organopolysiloxane containing two alkenyl groups bonded to silicon atoms at both ends of the chain per molecule,
(b) 1-10 wt% of at least one organopolysiloxane containing at least three alkenyl groups bonded to silicon atoms per molecule,
(c) 30-70 wt% of at least one organopolysiloxane containing two hydrogen atoms bonded to silicon atoms at both ends of the chain per molecule, and
(d) at least one hydrosilylation catalyst.

9. A silicone gel cured from the siloxane composition of any one of claims 1 to 8.

10. The silicone gel of claim 9, **characterized by** a penetration value of from 20 to 50 measured according to ASTM D1403 at ¼ cone.

11. Use of the siloxane composition of any one of claims 1 to 8 as a potting material.

12. The use of claim 11, wherein the siloxane composition is used as a potting material for displays.

13. Use of the siloxane composition of any one of claims 1 to 8 as an optical bonding material.

14. The use of claim 13, wherein the siloxane composition is used as an optical bonding material for displays.

## Patentansprüche

1. Siloxanzusammensetzung, umfassend:
(a) wenigstens ein Organopolysiloxan, das zwei an Siliciumatome gebundene Alkenylgruppen an beiden Enden der Kette pro Molekül enthält,
(b) wenigstens ein Organopolysiloxan, das wenigstens drei an Siliciumatome gebundene Alkenylgruppen pro Molekül enthält,
(c) wenigstens ein Organopolysiloxan, das zwei an Siliciumatome gebundene Wasserstoffatome an beiden Enden der Kette pro Molekül enthält, und
(d) wenigstens einen Hydrosilylierungskatalysator;
mit der Maßgabe, dass Komponente (c) in einer Menge von größer als oder gleich 30 Gew.-%, bezogen auf das Gesamtgewicht der Zusammensetzung, verwendet wird und dass die Zusammensetzung weniger als oder gleich 0,01 Gew.-% an Komponente (e) wenigstens ein Organopolysiloxan, das wenigstens drei an Siliciumatome gebunden Wasserstoffatom pro Molekül enthält, bezogen auf das Gesamtgewicht der Zusammensetzung umfasst; und
Komponente (c) eine dynamische Viskosität von größer als oder gleich 30 mPa.s und kleiner als 1.000 mPa.s bei 25 °C, gemessen mit einem Brookfield-Viskosimeter unter Verwendung von Spindel Nummer 3 bei einer Geschwindigkeit von 10 Upm bei Raumtemperatur, aufweist.

2. Siloxanzusammensetzung gemäß Anspruch 1, wobei Komponente (c) in einer Menge von größer als oder gleich 40 Gew.-%, bezogen auf das Gesamtgewicht der Zusammensetzung, verwendet wird.

3. Siloxanzusammensetzung gemäß Anspruch 1 oder 2, wobei Komponente (c) umfasst:
(c1) ein Organopolysiloxan, das zwei an Siliciumatome gebundene Wasserstoffatome an beiden Enden der Kette pro Molekül enthält, mit einer dynamischen Viskosität von größer als oder gleich 30 mPa.s und kleiner als oder gleich 200 mPa.s bei 25 °C, und
(c2) ein Organopolysiloxan, das zwei an Siliciumatome gebundene Wasserstoffatome an beiden Enden der Kette pro Molekül enthält, mit einer dynamischen Viskosität von größer als oder gleich 200 mPa.s und kleiner als oder gleich 5.000 mPa.s bei 25 °C.

4. Siloxanzusammensetzung gemäß Anspruch 3, wobei das Verhältnis der Molzahl Si-H-Gruppen, die von Komponente (c1) bereitgestellt werden, zu den von Komponente (c2) bereitgestellten 2: (1-10) beträgt.

5. Siloxanzusammensetzung gemäß einem der Ansprüche 1 bis 4, wobei Komponente (c) 0,6 bis 1,0 mol Si-H-Gruppen pro Mol der gesamten siliciumgebundenen Alkenylgruppen in den Komponenten (a) und (b) bereitstellt.

6. Siloxanzusammensetzung gemäß einem der Ansprüche 1 bis 5, wobei Komponente (b) ausgewählt ist aus der Gruppe bestehend aus
(b1) einem Organopolysiloxan, das im Wesentlichen aus R¹R²₂SiO_{1/2}- und SiO_{4/2}-Einheiten besteht,
(b2) einem Organopolysiloxan, das im Wesentlichen aus R²₃SiO_{1/2}- und R¹R²SiO_{2/2}-Einheiten besteht,
(b3) einem Organopolysiloxan, das im Wesentlichen aus R¹R²₂SiO_{1/2}-, R²R²SiO_{2/2}- und R²₂SiO_{2/2}-Einheiten besteht, und
(b4) einem Organopolysiloxan, das im Wesentlichen aus R¹R²₂SiO_{1/2}-, R²₂SiO_{2/2}- und R²SiO_{3/2}-Einheiten besteht;
wobei R¹ bei jedem Auftreten unabhängig eine Alkenylgruppe mit von 2 bis 6 Kohlenstoffatomen ist und R² bei jedem Auftreten unabhängig eine einwertige Kohlenwasserstoffgruppe, die frei von aliphatischer Unsättigung ist, mit von 1 bis 20 Kohlenstoffatomen ist.

7. Siloxanzusammensetzung gemäß einem der Ansprüche 1 bis 6, wobei Komponente (a) umfasst:
(a1) ein Organopolysiloxan, das zwei an Siliciumatome gebundene Alkenylgruppen an beiden Enden der Kette pro Molekül enthält, mit einer dynamischen Viskosität von größer als oder gleich 100 mPa.s und kleiner als oder gleich 5.000 mPa.s bei 25 °C, und
(a2) ein Organopolysiloxan, das zwei an Siliciumatome gebundene Alkenylgruppen an beiden Enden der Kette pro Molekül enthält, mit einer dynamischen Viskosität von größer als oder gleich 5.000 mPa.s und kleiner als oder gleich 50.000 mPa.s bei 25 °C.

8. Siloxanzusammensetzung gemäß einem der Ansprüche 1 bis 7, wobei die Zusammensetzung umfasst:
(a) 20-70 Gew.-% an wenigstens einem Organopolysiloxan, das zwei an Siliciumatome gebundene Alkenylgruppen an beiden Enden der Kette pro Molekül enthält,
(b) 1-10 Gew.-% an wenigstens einem Organopolysiloxan, das wenigstens drei an Siliciumatome gebundene Alkenylgruppen pro Molekül enthält,
(c) 30-70 Gew.-% an wenigstens einem Organopolysiloxan, das zwei an Siliciumatome gebundene Wasserstoffatome an beiden Enden der Kette pro Molekül enthält, und
(d) wenigstens einen Hydrosilylierungskatalysator.

9. Silicongel, gehärtet aus der Siloxanzusammensetzung gemäß einem der Ansprüche 1 bis 8.

10. Silicongel gemäß Anspruch 9, **gekennzeichnet durch** einen Penetrationswert von 20 bis 50, gemessen gemäß ASTM D1403 mit 1/4-Konus.

11. Verwendung der Siloxanzusammensetzung gemäß einem der Ansprüche 1 bis 8 als Vergussmaterial.

12. Verwendung gemäß Anspruch 11, wobei die Siloxanzusammensetzung als Vergussmaterial für Anzeigen verwendet wird.

13. Verwendung der Siloxanzusammensetzung gemäß einem der Ansprüche 1 bis 8 als optisches Bindematerial.

14. Verwendung gemäß Anspruch 13, wobei die Siloxanzusammensetzung als optisches Bindematerial für Anzeigen verwendet wird.

## Revendications

1. Composition de siloxane, comprenant :
(a) au moins un organopolysiloxane contenant deux groupes alcényle liés à des atomes de silicium au niveau des deux extrémités de la chaîne par molécule,
(b) au moins un organopolysiloxane contenant au moins trois groupes alcényle liés à des atomes de silicium par molécule,
(c) au moins un organopolysiloxane contenant deux atomes d'hydrogène liés à des atomes de silicium au niveau des deux extrémités de la chaîne par molécule, et
(d) au moins un catalyseur d'hydrosilylation ;
à la condition que le composant (c) soit utilisé en une quantité supérieure ou égale à 30 % en poids sur la base du poids total de la composition, et que la composition comprenne une quantité inférieure ou égale à 0,01 % en poids de composant (e) au moins un organopolysiloxane contenant au moins trois atomes d'hydrogène liés à des atomes de silicium par molécule sur la base du poids total de la composition ; et
le composant (c) ayant une viscosité dynamique supérieure ou égale à 30 mPa.s et inférieure ou égale à 1 000 mPa.s à 25° C, mesurée avec un viscosimètre Brookfield en utilisant une tige numéro 3 à une vitesse de 10 tpm à température ambiante.

2. Composition de siloxane selon la revendication 1, le composant (c) étant utilisé en une quantité supérieure ou égale à 40 % en poids sur la base du poids total de la composition.

3. Composition de siloxane selon la revendication 1 ou 2, le composant (c) comprenant
(c1) un organopolysiloxane contenant deux atomes d'hydrogène liés à des atomes de silicium au niveau des deux extrémités de la chaîne par molécule comportant une viscosité dynamique supérieure ou égale à 30 mPa.s et inférieure ou égale à 200 mPa.s à 25 °C et
(c2) un organopolysiloxane contenant deux atomes d'hydrogène liés à des atomes de silicium au niveau des deux extrémités de la chaîne par molécule comportant une viscosité dynamique supérieure ou égale à 200 mPa.s et inférieure ou égale à 5 000 mPa.s à 25 °C.

4. Composition de siloxane selon la revendication 3, le rapport du nombre de moles de groupes Si-H fournis par le composant (c1) sur ceux fournis par le composant (c2) étant de 2 : (1-10).

5. Composition de siloxane selon l'une quelconque des revendications 1 à 4, le composant (c) fournissant 0,6 à 1,0 mole de groupes Si-H par mole de groupes alcényle liés au silicium totaux dans les composants (a) et (b).

6. Composition de siloxane selon l'une quelconque des revendications 1 à 5, le composant (b) étant choisi dans le groupe constitué par
(b1) un organopolysiloxane essentiellement constitué de motifs R¹R²₂SiO_{1/2} et SiO_{4/2},
(b2) un organopolysiloxane essentiellement constitué de motifs R²₃SiO_{1/2} et R¹R²SiO_{2/2},
(b3) un organopolysiloxane essentiellement constitué de motifs R¹R²₂SiO_{1/2}, R¹R²SiO_{2/2} et R²₂SiO_{2/2}, et
(b4) un organopolysiloxane essentiellement constitué de motifs R²R²₂SiO_{1/2}, R²₂SiO_{2/2} et R²SiO_{3/2} ; R¹ étant indépendamment en chaque occurrence un groupe alcényle ayant de 2 à 6 atomes de carbone, et R² étant indépendamment en chaque occurrence un groupe hydrocarboné monovalent exempt d'insaturation aliphatique ayant de 1 à 20 atomes de carbone.

7. Composition de siloxane selon l'une quelconque des revendications 1 à 6, le composant (a) comprenant
(a1) un organopolysiloxane contenant deux groupes alcényle liés à des atomes de silicium au niveau des deux extrémités de la chaîne par molécule comportant une viscosité dynamique supérieure ou égale à 100 mPa.s et inférieure à 5 000 mPa.s à 25° C et
(a2) un organopolysiloxane contenant deux groupes alcényle liés à des atomes de silicium au niveau des deux extrémités de la chaîne par molécule comportant une viscosité dynamique supérieure ou égale à 5 000 mPa.s et inférieure ou égale à 50 000 mPa.s à 25 °C.

8. Composition de siloxane selon l'une quelconque des revendications 1 à 7, la composition comprenant :
(a) 20 à 70 % en poids d'au moins un organopolysiloxane contenant deux groupes alcényle liés à des atomes de silicium au niveau des deux extrémités de la chaîne par molécule,
(b) 1 à 10 % en poids d'au moins un organopolysiloxane contenant au moins trois groupes alcényle liés à des atomes de silicium par molécule,
(c) 30 à 70 % en poids d'au moins un organopolysiloxane contenant deux atomes d'hydrogène liés à des atomes de silicium au niveau des deux extrémités de la chaîne par molécule, et
(d) au moins un catalyseur d'hydrosilylation.

9. Gel de silicone durci à partir de la composition de siloxane selon l'une quelconque des revendications 1 à 8.

10. Gel de silicone selon la revendication 9, **caractérisé par** une valeur de pénétration allant de 20 à 50 mesurée selon la norme ASTM D1403 à ¼ de cône.

11. Utilisation de la composition de siloxane selon l'une quelconque des revendications 1 à 8 en tant que matériau d'enrobage

12. Utilisation selon la revendication 11, la composition de siloxane étant utilisée comme matériau d'enrobage pour des affichages.

13. Utilisation de la composition de siloxane selon l'une quelconque des revendications 1 à 8 en tant que matériau de liaison optique.

14. Utilisation selon la revendication 13, la composition de siloxane étant utilisée comme matériau de liaison optique pour des affichages.
